# EUROPÄISCHE PATENTSCHRIFT

(11) **EP 3 198 750 B1**
(45) Veröffentlichungstag und Bekanntmachung des Hinweises auf die Patenterteilung: **28.11.2018**
(21) Anmeldenummer: 15798323.0
(22) Anmeldetag: 21.09.2015
(51) Int. Cl.: H04B 10/54, G02F 1/017, G02F 1/225, H01S 5/026, H04B 10/548

(54) **INJEKTIONSMODULATOR**
INJECTION MODULATOR
MODULATEUR D'INJECTION

(30) Priorität: 24.09.2014 DE 102014219295
(43) Veröffentlichungstag der Anmeldung: 02.08.2017
(73) Patentinhaber: Technische Universität Berlin, 10623 Berlin (DE); Sicoya GmbH, 12489 Berlin (DE)
(72) Erfinder: MEISTER, Stefan, 12587 Berlin (DE); AL-SAADI, Aws, 10559 Berlin (DE); KUPIJAI, Sebastian, 12247 Berlin (DE); THEISS, Christoph, 14169 Berlin (DE); RHEE, Hanjo, 10439 Berlin (DE); ZIMMERMANN, Lars, 10623 Berlin (DE); STOLAREK, David, 15230 Frankfurt (Oder) (DE)
(74) Vertreter: Fischer, Uwe
(86) Internationale Anmeldenummer: PCT/DE2015/200460
(87) Internationale Veröffentlichungsnummer: WO 2016/045675

(56) Entgegenhaltungen:
- DE-A1-102011 005 422
- US-A1- 2014 127 842
- ZHI-YONG LI ET AL: "Silicon waveguide modulator based on carrier depletion in periodically interleaved PN junctions", OPTICS EXPRESS, Bd. 17, Nr. 18, 31. August 2009 (2009-08-31), Seite 15947, XP55026582, ISSN: 1094-4087, DOI: 10.1364/OE.17.015947 in der Anmeldung erwähnt

## Beschreibung

Die Erfindung bezieht sich auf einen Injektionsmodulator zur Modulation optischer Strahlung.

Für die Modulation optischer Signale in Verbindung mit Wellenleitern gibt es vielfache Anwendungsbereiche, wie beispielsweise in der Kommunikationstechnologie, der Sensorik, der Bildübertragung etc. Insbesondere in Halbleitermaterialien (wie z. B. Silizium, InP, GaAs) integrierte elektrooptische Modulatoren spielen dabei eine bedeutende Rolle. Elektrooptische Modulatoren, basierend auf Silizium-Wellenleitern, gewinnen zunehmend an Interesse, da diese eine Schlüsselkomponente für optische Breitbandübertragung für die sogenannte On-Chip, Chip-to-Chip, Faser-Kommunikation etc. darstellen. Mit optischen Verbindungen lassen sich wesentlich höhere Bandbreiten, bei moderatem Energieverbrauch, verglichen mit den bisher üblichen metallbasierten Verbindungen erreichen.

Es sind verschiedene Bauformen für Lichtmodulatorbauteile für solche Übertragungsstrecken bekannt. Die bekanntesten Bauformen sind Mach-Zehnder Modulatoren (Liu et al., Optics Express, 15, 660, 2007), Ringresonatoren (Xu et al. Nature, 435, 325, 2005) und Fabry-Perot-Resonatoren (Schmidt et al., Optics Express, 16, 334, 2008).

In der Nachrichtenübertragung mit hohen Datenraten werden häufig Mach-Zehnder Modulatoren eingesetzt. Der große Vorteil von Mach-Zehnder Modulatoren liegt in der großen optischen Bandbreite, d. h. der hohen Toleranz der Modulatoren gegenüber Wellenlängenänderungen des zu modulierenden Lichts und der hohen erzielbaren Modulationstiefe (des Extinktionsverhältnisses) .

Bei den Mach-Zehnder Modulatoren auf Wellenleiterbasis (Liu et al. Optics Express, 15, 660, 2007) durchläuft das Licht in mindestens einem Arm des Modulators ein elektrooptisches Material. Der Brechungsindex (oder auch die Absorption) des elektrooptischen Materials lässt sich durch Anlegen einer Spannung variieren. Dadurch erfährt die Lichtwelle in diesem Arm eine Phasenverschiebung. Beträgt die Phasenverschiebung π (oder ein ungerades, ganzzahliges Vielfaches von π) gegenüber der Lichtwelle, die den anderen Arm des Modulators durchläuft, kommt es bei der Überlagerung der beiden Wellen zu einer destruktiven Interferenz an einem Ausgang des Mach-Zehnder Modulators. Der Modulator kann zwischen Zuständen konstruktiver und destruktiver Interferenz betrieben werden, auch Amplituden-Modulation genannt. Des Weiteren kann die Modulatorstruktur auch zwischen Zuständen gleicher Amplitude, aber unterschiedlicher Phase betrieben werden, auch Phasenmodulation genannt. Ebenfalls kann auch zwischen Kombinationen dieser Zustände geschaltet werden. Dies wird in der Regel zur Erhöhung der mit einem Symbol übertragbaren Bits (auch höhere Modulationsformate) verwendet. Um eine Phasenverschiebung von n zu erreichen, muss das Licht eine Wegstrecke, üblicherweise im Millimeter- bis Zentimeterbereich, im elektrooptischen Material durchlaufen. Diese Wegstrecke und damit die minimale Baulänge eines Mach-Zehnder Modulators sind abhängig von der Stärke des elektro-optischen Effekts.

Zur Erzeugung des elektrooptischen Effekts werden im Halbleitermaterial Bereiche im oder nahe des Wellenleiters dotiert. So wird beispielsweise in Silicon-On-Insulator (SOI) Wellenleitern durch Dotierung eine p-i-n oder auch p-n Diodenstruktur erzeugt (Reed et al., Nature Photonics, 4, 518, 2010). Unter Verwendung solcher Dioden-Strukturen kann die Ladungsträgerkonzentration in den Wellenleitern gezielt verändert werden. Dies führt durch den sogenannten Free-Carrier-Plasma-Dispersion Effekt zu einer Veränderung des Brechungsindex sowie des Absorptionsverhaltens im Wellenleiter (Soref et al., IEEE J. Quant. Electron., 23, 123, 2004). Dabei können durch Anlegen einer Spannung an die Diode in Durchlassrichtung Ladungsträger in den Wellenleiter injiziert werden (genannt Injektion), oder durch Anlegen einer Spannung an die Diode in Sperrrichtung Ladungsträger aus dem Wellenleiter abgesaugt werden (genannt Depletion oder Verarmung).

Bei elektrooptischen Lichtmodulatoren nach dem Prinzip "Depletion" (Verarmung) wird der Wellenleiterkern selbst p- und/oder n-dotiert. Die Modulation des Lichts erfolgt durch eine Reduktion der Ladungsträger im Lichtwellenleiter. Es ist bekannt, dass durch das Absaugen der Ladungsträger in Depletion-Modulatoren sehr hohe Modulationsgeschwindigkeiten erreicht werden können. Die Dotierung des Wellenleiterkerns führt jedoch zu einer hohen Absorption und damit zu hohen optischen Verlusten.

In einer Veröffentlichung von Z.-Y. Li et al. (Opt. Express 17, 15947, 2009) werden alternierende p- und n-dotierte Bereiche einer p-n Diode in einem Depletion-Modulator gezeigt, mit deren Hilfe sich die Länge der "Verarmungszone" im p-n Übergang relativ zum Wellenleiter verlängern lässt. Dadurch kann der elektro-optische Effekt erhöht werden und somit die Baugröße des Modulators verringert werden. Die Modulationsgeschwindigkeit des Modulators lässt sich durch diese Anordnung nicht steigern.

Die Druckschrift DE 10 2011 005 422 A1 offenbart einen elektrooptischen Modulator zum Modulieren optischer Strahlung einer vorgegebenen Wellenlänge, wobei der elektrooptische Modulator mindestens einen optischen Resonator aufweist, in dem sich für die vorgegebene Wellenlänge eine stehende optische Welle ausbilden kann. Ferner ist vorgesehen, dass in dem Resonator zumindest zwei dotierte Halbleiterabschnitte - in Längsrichtung des Resonators gesehen - beabstandet zueinander angeordnet sind und sich die zumindest zwei dotierten Halbleiterabschnitte jeweils lokal in einem Intensitatsminimum der stehenden optischen Welle befinden.

In der US-Offenlegungsschrift US 2014/127842 A1 wird ein Verfahren zum Bilden eines optischen Modulators offenbart. Das Verfahren umfasst das Bereitstellen eines Substrats, Implantieren von Dotierstoffen eines ersten Leitfähigkeitstyps in das Substrat, um einen ersten dotierten Bereich zu bilden, Dotieren eines zweiten Leitfähigkeitstyps in das Substrat, um einen zweiten dotierten Bereich zu bilden, wobei ein Abschnitt des zweiten dotierten Bereichs ausgebildet ist und mit einem Teil des ersten dotierten Bereichs überlappt und diesen überlappt, um einen Übergang zwischen den jeweiligen Teilen des ersten dotierten Bereichs und des zweiten dotierten Bereichs zu bilden, und wobei ein verbleibender Bereich des zweiten dotierten Bereichs außerhalb des Übergangs angeordnet ist und einen Stegwellenleiter bildet, wobei der Stegwellenleiter sich mit mindestens einem Teil der Verbindung überlappt.

Ein Injektionsmodulator mit den Merkmalen gemäß dem Oberbegriff des Patentanspruchs 1 ist aus der Veröffentlichung "CMOS compatible fully integrated Mach-Zehnder interferometer in SOI technology" P. Dainesi et al., IEEE Photonics Technology Letters, Vol. 12, No. 6, Juni 2000, bekannt.

Der Erfindung liegt die Aufgabe zugrunde, einen Injektionsmodulator anzugeben, bei dem sich ein schneller und großer Modulationseffekt bei gleichzeitig verhältnismäßig geringer optischer Dämpfung erreichen lässt.

Diese Aufgabe wird erfindungsgemäß durch einen Injektionsmodulator mit den Merkmalen gemäß Patentanspruch 1 gelöst. Vorteilhafte Ausgestaltungen des erfindungsgemäßen Modulators sind in Unteransprüchen angegeben.

Danach ist erfindungsgemäß vorgesehen, dass p-dotierte Halbleiterabschnitte auf einer Seite des Wellenleiters liegen - in Längsrichtung gesehen und bezogen auf die Wellenleitermitte -, n-dotierte Halbleiterabschnitte auf der anderen Seite des Wellenleiters liegen und ein Zwischenabschnitt im Bereich der Wellenleitermitte liegt, sich die Halbleiterabschnitte jeweils quer zur Wellenleiterlängsrichtung in Richtung auf die Wellenleitermitte des Wellenleiters erstrecken und die p-dotierten Halbleiterabschnitte - in Längsrichtung des Wellenleiters betrachtet - jeweils mit den n-dotierten Halbleiterabschnitten überlappungsfrei sind.

Ein wesentlicher Vorteil des erfindungsgemäßen Injektionsmodulators ist darin zu sehen, dass die p-dotierten Halbleiterabschnitte und die n-dotierten Halbleiterabschnitte durch ihre erfindungsgemäße Anordnung relativ hoch dotiert werden können, so dass sich ein relativ starker elektrooptischer Effekt im Wellenleiter erreichen lässt. Die hochdotierten Halbleiterabschnitte verursachen dabei wegen ihrer überlappungsfreien Anordnung lediglich eine nur geringe zusätzliche Dämpfung.

Die p-dotierten Halbleiterabschnitte und die n-dotierten Halbleiterabschnitte sind vorzugsweise jeweils elektrisch parallel geschaltet.

Bezüglich der Ausgestaltung des Wellenleiters und der Diodenstruktur wird es als besonders vorteilhaft angesehen, wenn der Wellenleiter ein Rippenwellenleiter ist, der einen wellenführenden erhabenen Rippenabschnitt und zwei benachbarte in Rippenlängsrichtung gesehen parallel zum Rippenabschnitt verlaufende Stegabschnitte aufweist, sich die p-dotierten Halbleiterabschnitte in einem der beiden Stegabschnitte befinden, sich die n-dotierten Halbleiterabschnitte in dem anderen der beiden Stegabschnitte befinden und zumindest die Mitte des Rippenabschnitts frei von den p- und n-dotierten Halbleiterabschnitten ist.

Mit Blick auf eine minimale Wellenleiterdämpfung im Modulationsbereich wird es als vorteilhaft angesehen, wenn der gesamte Rippenabschnitt frei von den p- und n-dotierten Halbleiterabschnitten ist.

Mit Blick auf eine besonders hohe elektrische Feldstärke im Wellenleiterbereich wird es als vorteilhaft angesehen, wenn die p-dotierten Halbleiterabschnitte Zinkenabschnitte einer p-dotierten Kammstruktur bilden, deren Zinken in Wellenleiterlängsrichtung beabstandet zueinander angeordnet sind und sich jeweils ausgehend von einem außerhalb des Wellenleiters befindlichen gemeinsamen Kontaktanschluss von außen quer zur Wellenleiterlängsrichtung in Richtung der Wellenleitermitte des Wellenleiters erstrecken, und die n-dotierten Halbleiterabschnitte Zinkenabschnitte einer n-dotierten Kammstruktur bilden, deren Zinken in Wellenleiterlängsrichtung beabstandet zueinander angeordnet sind und sich ausgehend von einem außerhalb des Wellenleiters befindlichen gemeinsamen Kontaktanschluss jeweils von außen quer zur Wellenleiterlängsrichtung in Richtung der Wellenleitermitte des Wellenleiters erstrecken.

Vorzugsweise weist der Rippenwellenleiter eine wellenführende Schicht und eine darunter liegende untere Mantelschicht auf. Bei einer solchen Ausgestaltung des Rippenwellenleiters ist es vorteilhaft, wenn sich die Dotierung der n-dotierten Halbleiterabschnitte und die der p-dotierten Halbleiterabschnitte jeweils von der Oberfläche der wellenführenden Schicht des Rippenwellenleiters bis zu der unteren Mantelschicht erstreckt.

Vorzugsweise ist die die Breite der p-dotierten und die der n-dotierten Halbleiterabschnitte jeweils kleiner als der Abstand zwischen benachbarten Halbleiterabschnitten gleicher Dotierung; eine solche Ausgestaltung hält die Wellenleiterdämpfung im Wellenleiter klein. Besonders bevorzugt ist das Verhältnis zwischen der Breite der Halbleiterabschnitte und dem Abstand zwischen benachbarten Halbleiterabschnitten kleiner als 1/4.

Hinsichtlich der Ausgestaltung und Anordnung der Halbleiterabschnitte wird es als vorteilhaft angesehen, wenn die p-dotierten Halbleiterabschnitte Bestandteile einer ersten Kammstruktur bilden und die n-dotierten Halbleiterabschnitte Bestandteile einer zweiten Kammstruktur bilden. Die Kammrücken der beiden Kammstrukturen sind vorzugsweise parallel zum Wellenleiter ausgerichtet und weisen vorzugsweise jeweils einen Abstand von dem erhabenen Rippenabschnitt des Rippenwellenleiters auf.

Die Kammrücken sind bevorzugt jeweils durch einen metallischen Kontaktanschluss gebildet oder weisen einen solchen bevorzugt zumindest auch auf. Unterhalb der Kontaktanschlüsse ist das Halbleitermaterial vorzugsweise ebenfalls dotiert. Zwischen den Kontaktanschlüssen und dem Halbleitermaterial können sich weitere Schichten, bestehend beispielsweise aus Silizid befinden.

Mit Blick auf minimale Wellenleiterverluste wird es als vorteilhaft angesehen, wenn die Dotierung im Bereich des Zwischenabschnitts so gering ist, dass die intrinsische Ladungsträgerdichte im schwach oder undotierten Zwischenabschnitt größer als die Dotierung im Zwischenabschnitt ist.

Um eine gleichmäßige Modulation im Modulationsbereich zu gewährleisten, wird es als vorteilhaft angesehen, wenn der Injektionsmodulator resonatorfrei ist und der Wellenleiter insgesamt resonanzfrei ist.

Ebenfalls mit Blick auf eine gleichmäßige Modulation in Wellenleiterlängsrichtung wird es als vorteilhaft angesehen, wenn die p-dotierten Halbleiterabschnitte und die n-dotierten Halbleiterabschnitte - in Längsrichtung des Wellenleiters gesehen - um einen halben Abstand zwischen benachbarten Halbleiterabschnitten versetzt zueinander angeordnet sind. Mit anderen Worten ist es vorteilhaft, wenn zumindest einer der p-dotierten Halbleiterabschnitte - in Längsrichtung des Wellenleiters gesehen - mittig zwischen zwei schräg gegenüber liegenden n-dotierten Halbleiterabschnitten angeordnet ist und wenn zumindest einer der n-dotierten Halbleiterabschnitte - in Längsrichtung des Wellenleiters gesehen - mittig zwischen zwei schräg gegenüber liegenden p-dotierten Halbleiterabschnitten angeordnet ist.

Bei einer besonders bevorzugten Ausgestaltung des Injektionsmodulators ist vorgesehen, dass die p-dotierten Halbleiterabschnitte eine p-dotierte Kammstruktur oder Bestandteile einer solchen und die n-dotierten Halbleiterabschnitte eine n-dotierte Kammstruktur oder Bestandteile einer solchen bilden. Die p-dotierte Kammstruktur ist vorzugsweise auf einer Seite des Wellenleiters und die n-dotierte Kammstruktur auf der anderen Seite des Wellenleiters angeordnet. Die Zinken der beiden Kammstrukturen sind bevorzugt jeweils in Richtung der Wellenleitermitte des Wellenleiters ausgerichtet. Die Zinken der p-dotierten Kammstruktur sind mit denen der n-dotierten Kammstruktur - in Längsrichtung des Wellenleiters betrachtet - überlappungsfrei.

Die Wellenleitermitte, vorzugsweise der gesamte Wellenleiter, ist vorzugsweise zinkenfrei. Im Falle eines Rippenwellenleiters ist vorzugsweise der gesamte erhabene Rippenabschnitt des Rippenwellenleiters zinkenfrei.

Bezüglich der Ausgestaltung der Zinken wird es als vorteilhaft angesehen, wenn die Breite der Zinken sowohl mindestens 4-mal kleiner als die Länge der Zinken als auch mindestens 4-mal kleiner als der Abstand zwischen benachbarten Zinken ist.

Der Wellenleiter des Injektionsmodulators bildet vorzugsweise eine MZI (Mach-Zehnder Interferometer)-Struktur. Im Falle einer solchen Ausgestaltung wird es als vorteilhaft angesehen, wenn zumindest einer der Arme der MZI-Struktur mit einer Diodenstruktur zur Injektion von Ladungsträgern ausgestattet ist.

Alternativ kann der Wellenleiter des Injektionsmodulators in einem Ring eines Ringmodulators angeordnet sein.

Die Erfindung bezieht sich darüber hinaus auf eine Anordnung mit einem Injektionsmodulator, wie er oben beschrieben worden ist, und einer Strahlungsquelle.

Bei einer solchen Anordnung ist es vorteilhaft, wenn der Abstand der p-dotierten Halbleiterabschnitte untereinander und der Abstand der n-dotierten Halbleiterabschnitte untereinander jeweils größer oder kleiner als die Hälfte der Wellenlänge der Strahlung der Strahlungsquelle ist oder größer oder kleiner als ein ganzzahliges Vielfachen dieser Hälfte ist. Ein Abstand zwischen den Halbleiterabschnitten, der größer oder kleiner als die Hälfte der Wellenlänge der Strahlung ist, stellt sicher, dass es durch die p- und n-dotierten Halbleiterabschnitte zu keiner Resonanzbildung innerhalb des modulierten Wellenleiterabschnittes kommen kann und eine - in Wellenleiterlängsrichtung gesehen - gleichmäßige Modulation erreicht wird.

Die Erfindung bezieht sich darüber hinaus auf ein Verfahren zur Modulation optischer Strahlung, bei dem mit einer Injektionsdiodenstruktur Ladungsträger in einen resonanzfreien Abschnitt eines Wellenleiters, in dem - von Wellenleiterdämpfung abgesehen - die Strahlungsintensität der im Wellenleiter geführten Strahlung konstant ist, injiziert werden oder zuvor injizierte aus diesem extrahiert werden.

Erfindungsgemäß ist bezüglich eines solchen Verfahrens vorgesehen, dass die Injektion oder Extraktion von Löchern von einer Seite des Wellenleiters aus und die Injektion oder Extraktion von Elektronen von der anderen Seite des Wellenleiters mittels einer Diodenstruktur erfolgt, die zumindest zwei p-dotierte Halbleiterabschnitte, zumindest zwei n-dotierte Halbleiterabschnitte und mindestens einen schwach oder undotierten Zwischenabschnitt zwischen den p-dotierten und n-dotierten Halbleiterabschnitten aufweist, wobei die p-dotierten Halbleiterabschnitte auf einer Seite des Wellenleiters - in Wellenleiterlängsrichtung gesehen und bezogen auf die Wellenleitermitte - liegen, die n-dotierten Halbleiterabschnitte auf der anderen Seite des Wellenleiters liegen und der Zwischenabschnitt im Bereich der Wellenleitermitte liegt, wobei sich die Halbleiterabschnitte jeweils quer zur Wellenleiterlängsrichtung in Richtung der Wellenleitermitte des Wellenleiters erstrecken und wobei die p-dotierten Halbleiterabschnitte - in Längsrichtung des Wellenleiters betrachtet - jeweils gegenüber den n-dotierten Halbleiterabschnitten sowohl versetzt als auch überlappungsfrei sind.

Bezüglich der Vorteile des erfindungsgemäßen Verfahrens sei auf die obigen Ausführungen im Zusammenhang mit dem erfindungsgemäßen Injektionsmodulator verwiesen.

Die Erfindung wird nachfolgend anhand von Ausführungsbeispielen näher erläutert; dabei zeigen beispielhaft:
- Figur 1: ein Ausführungsbeispiel für einen Injektionsmodulator, bei dem Kammstrukturen einer Injektionsdiodenstruktur außerhalb eines zu modulierenden Wellenleiters angeordnet sind,
- Figur 2: den Injektionsmodulator gemäß Figur 1 im Querschnitt,
- Figur 3: ein Ausführungsbeispiel für einen Injektionsmodulator, bei dem sich die Halbleiterabschnitte in den Wellenleiterbereich hinein erstrecken,
- Figur 4: den Injektionsmodulator gemäß Figur 3 im Querschnitt,
- Figur 5: ein Ausführungsbeispiel für einen Injektionsmodulator, bei dem ein mittels einer Diodenstruktur modulierbarer Wellenleiter eine Mach-Zehnder-Interferometerstruktur bildet,
- Figur 6: ein weiteres Ausführungsbeispiel für einen Injektionsmodulator, bei dem ein optischer Wellenleiter eine Mach-Zehnder-Interferometerstruktur bildet, wobei beide Arme der Interferometerstruktur mit einer Diodenstruktur ausgestattet sind, und
- Figur 7: ein Ausführungsbeispiel für einen Ringresonator, bei dem ein resonanzfreier Abschnitt eines Wellenleiters mit einer Diodenstruktur ausgestattet ist.

In den Figuren werden der Übersicht halber für identische oder vergleichbare Komponenten stets dieselben Bezugszeichen verwendet.

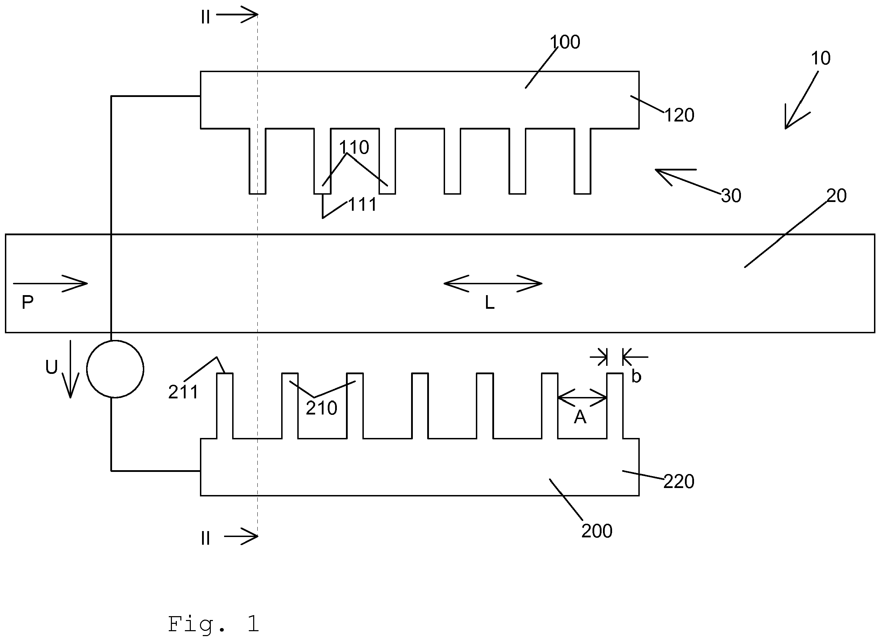

Die Figur 1 zeigt einen Injektionsmodulator 10, der einen optischen Wellenleiter 20 sowie eine Diodenstruktur 30 umfasst. Die Diodenstruktur 30 weist eine in der Figur 1 obere, erste Kammstruktur 100 zur Injektion von Löchern und eine in der Figur 1 untere, zweite Kammstruktur 200 zur Injektion von Elektronen auf.

Die erste Kammstruktur 100 ist mit p-dotierten Halbleiterabschnitten 110 ausgestattet, die sich ausgehend von einem Kammrücken 120 fingerförmig in Richtung des Wellenleiters 20 erstrecken. Die Erstreckungsrichtung der p-dotierten Halbleiterabschnitte 110 in Richtung des Wellenleiters 20 ist ausgehend von der Längsrichtung L des Kammrückens 120 bzw. bezogen auf die Längsrichtung L des Wellenleiters 20 vorzugsweise senkrecht. Die Längsrichtung L des Kammrückens 120 und die Längsrichtung L des Wellenleiters 20 sind vorzugsweise parallel. Die Längsrichtung L des Wellenleiters 20 entspricht der Ausbreitungsrichtung der darin geführten optischen Strahlung P.

Die beabstandet und vorzugsweise zueinander parallel angeordneten p-dotierten Halbleiterabschnitte 110 bilden somit anschaulich die Zinken der Kammstruktur 100, deren Spitzen 111 zur Injektion von Löchern dienen, sobald die Diodenstruktur 30 in Betrieb genommen wird.

Die zweite Kammstruktur 200 ist mit n-dotierten Halbleiterabschnitten 210 ausgestattet, die sich ausgehend von einem Kammrücken 220 senkrecht zur Längsrichtung L des Kammrückens 220 und senkrecht zur Längsrichtung L des Wellenleiters 20 in Richtung auf den Wellenleiter 20 hin erstrecken. Die n-dotierten Halbleiterabschnitte 210 sind beabstandet und vorzugsweise zueinander parallel angeordnet und dienen - bei Betrieb der Diodenstruktur 30 - mit ihren Spitzen 211 zur Injektion oder Extraktion von Löchern in bzw. aus dem Wellenleiter 20.

Um eine gleichmäßige Modulation der im Wellenleiter 20 geführten Strahlung zu erreichen, ist die Diodenstruktur 30 vorzugsweise in einem resonanzfreien Abschnitt des Wellenleiters 20 angeordnet, in dem - von Wellenleiterdämpfung abgesehen - die Strahlungsintensität der im Wellenleiter 20 geführten Strahlung P zumindest näherungsweise konstant ist.

Ebenfalls mit Blick auf eine gleichmäßige Modulation der im Wellenleiter 20 geführten Strahlung P ist bei dem Ausführungsbeispiel gemäß Figur 1 vorgesehen, dass die p-dotierten Halbleiterabschnitte 110 der ersten Kammstruktur 100 gegenüber den n-dotierten Halbleiterabschnitten 210 der zweiten Kammstruktur 200 versetzt sind. Vorzugsweise ist der Versatz derart gewählt, dass Spitzen 111 der p-dotierten Halbleiterabschnitte 110 jeweils zwischen den Spitzen 211 der n-dotierten Halbleiterabschnitte 210 und Spitzen 211 der n-dotierten Halbleiterabschnitte 210 jeweils zwischen zugeordneten Spitzen 111 der p-dotierten Halbleiterabschnitte 110 liegen, wie dies die Figur 1 zeigt.

Der Kammrücken 120 der ersten Kammstruktur 100 wird vorzugsweise durch einen p-dotierten Halbleiterabschnitt gebildet, der ganz oder zumindest abschnittsweise mit einem metallischen Kontaktanschluss versehen ist. Der Kammrücken 220 wird in entsprechender Weise vorzugsweise durch n-dotiertes Halbleitermaterial gebildet, das ganz oder zumindest abschnittsweise mit metallischen Kontaktanschlüssen versehen ist.

Der Injektionsmodulator 10 gemäß Figur 1 lässt sich beispielsweise wie folgt betreiben:
Zur Injektion von Ladungsträgern in den Bereich des Wellenleiters 20 wird die Diodenstruktur 30 mittels einer Spannungs- oder Stromquelle U unter eine Flussspannung gesetzt, wodurch seitens der p-dotierten Halbleiterabschnitte 110 Löcher in Richtung Wellenleiter 20 und in Richtung der zweiten Kammstruktur 200 sowie seitens der n-dotierten Halbleiterabschnitte 210 Elektronen in Richtung des Wellenleiters 20 bzw. in Richtung der p-dotierten Halbleiterabschnitte 110 emittiert werden. Die in den Bereich des Wellenleiters 20 injizierten Löcher und Elektronen modifizieren den Brechzahlindex innerhalb des Wellenleiters 20, so dass es zu einer Phasenmodulation und - aufgrund der Ladungsträger - auch zu einer gewissen Dämpfung der in dem Wellenleiter 20 geführten Strahlung kommt.

Sollen die injizierten Ladungsträger möglichst schnell aus dem Bereich des Wellenleiters 20 extrahiert werden, um eine Umschaltung der Modulation zu bewirken, so wird vorzugsweise eine Sperrspannung an die Diodenstruktur 30 angelegt, wodurch die im Bereich des Wellenleiters 20 befindlichen Löcher und Elektronen von der ersten Kammstruktur 100 und der zweiten Kammstruktur 200 abgesaugt werden.

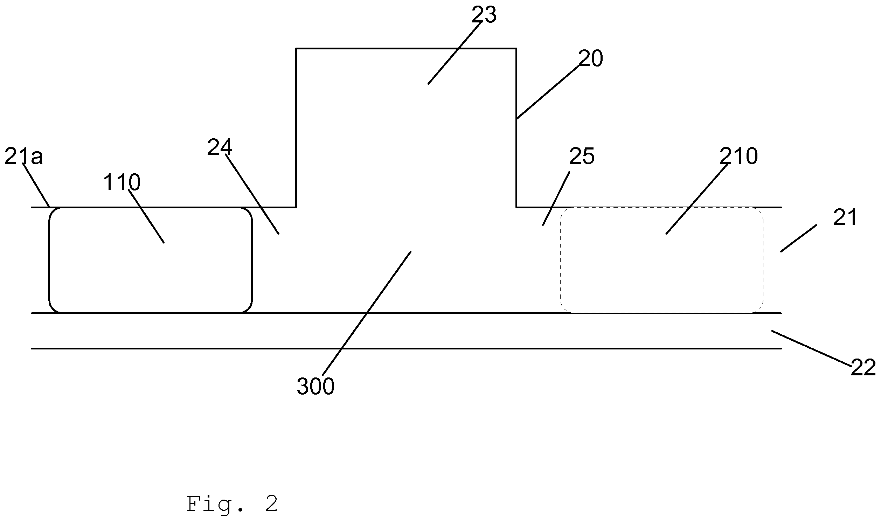

Die Figur 2 zeigt den Injektionsmodulator 10 gemäß Figur 1 in einem Schnitt entlang der Schnittlinie II-II gemäß Figur 1.

Es lässt sich erkennen, dass es sich bei dem Wellenleiter 20 vorzugsweise um einen Rippenwellenleiter handelt, der in einer wellenführenden Schicht 21 ausgebildet ist. Die wellenführende Schicht 21 befindet sich auf einer unteren Mantelschicht 22, die zwecks Wellenführung in vertikaler Richtung eine kleinere Brechzahl als die wellenführende Schicht 21 aufweist.

Zur lateralen Wellenführung ist der Wellenleiter 20 mit einem Rippenabschnitt 23 versehen, an den sich - in Längsrichtung des Wellenleiters gesehen - links und rechts zwei Stegabschnitte 24 und 25 anschließen. Die Steghöhe der Stegabschnitte 24 und 25 ist kleiner als die Höhe im Rippenabschnitt 23.

Die Figur 2 zeigt darüber hinaus die Anordnung der p-dotierten Halbleiterabschnitte 110 und der n-dotierten Abschnitte 210. Aufgrund der gewählten Schnittebene befindet sich lediglich der p-dotierte Halbleiterabschnitt 110 in der dargestellten Ebene, so dass nur dieser mit einer durchgezogenen Linie dargestellt ist. Der n-dotierte Halbleiterabschnitt 210 ist entlang der gewählten Blickrichtung räumlich hinter dem p-dotierten Halbleiterabschnitt 110 angeordnet und daher nur mit einer gestrichelten Linie dargestellt.

Mit anderen Worten wird durch die in der Figur 2 gewählte Art der Striche zeichnerisch visualisiert, dass sich die p-dotierten Halbleiterabschnitte 110 und die n-dotierten Halbleiterabschnitte 210 nicht in derselben Ebene befinden, sondern gegeneinander versetzt sind, wie dies im Zusammenhang mit der Figur 1 bereits erwähnt worden ist. Bei dem Ausführungsbeispiel gemäß den Figuren 1 und 2 ist mit Blick auf eine minimale Dämpfung der in dem Wellenleiter 20 geführten Strahlung die Anordnung der beiden Kammstrukturen 100 und 200 derart gewählt, dass die Spitzen 111 und 211 der p-dotierten Halbleiterabschnitte 110 bzw. der n-dotierten Halbleiterabschnitte 210 stets außerhalb des Rippenabschnitts 23 des Wellenleiters 20 liegen.

Mit Blick auf eine möglichst effiziente Injektion von Elektronen und Löchern ist die Dotierung der p-dotierten Halbleiterabschnitte 110 und die der n-dotierten Halbleiterabschnitte 210 derart gewählt, dass sich diese ausgehend von der Oberfläche 21a der wellenführenden Schicht 21 bis hinunter zur unteren Mantelschicht 22 erstreckt. Diese Dotierungstiefe gewährleistet, dass der Wellenleiter 20 im Bereich der gesamten Steghöhe der Stegabschnitte 24 und 25 gleichmäßig mit Ladungsträgern gefüllt werden kann.

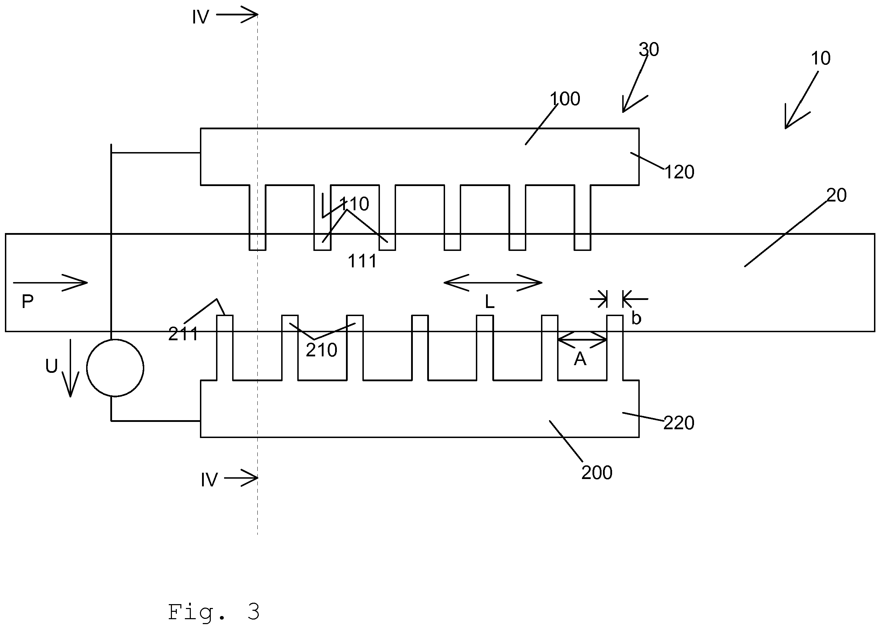

Die Figur 3 zeigt ein Ausführungsbeispiel für einen Injektionsmodulator, der vom Aufbau her dem Injektionsmodulator 10 gemäß den Figuren 1 und 2 entspricht. Im Unterschied zu dem Injektionsmodulator gemäß den Figuren 1 und 2 sind die beiden Kammstrukturen 100 und 200 der Diodenstruktur 30 näher am Wellenleiter 20 angeordnet. So lässt sich in der Figur 3 erkennen, dass die Spitzen 111 und 211 der p-dotierten Halbleiterabschnitte 110 bzw. der n-dotierten Halbleiterabschnitte 210 der beiden Kammstrukturen 100 und 200 bis in den Wellenleiter 20 hineinragen. Lediglich die Kammrücken 120 und 220 der beiden Kammstrukturen 100 und 200 befinden sich außerhalb des Wellenleiters 20.

Aufgrund des geringeren Abstands zwischen den p-dotierten Halbleiterabschnitten 110 und den n-dotierten Halbleiterabschnitten 210 lässt sich bei Betrieb der Diodenstruktur 30 sowohl eine größere elektrische Feldstärke innerhalb des Wellenleiters 20, eine höhere Modulationsgeschwindigkeit durch schnelleres injizieren und extrahieren von zuvor injizierten Ladungsträgern, als auch eine höhere Ladungsträgerdichte innerhalb des Wellenleiters 20 erreichen. Nachteilig ist die höhere Dämpfung der optischen Strahlung P im Wellenleiter 20, die durch die in den Wellenleiter 20 hineinragenden Abschnitte der p-dotierten Halbleiterabschnitte 110 und der n-dotierten Halbleiterabschnitte 210 hervorgerufen wird; denn die Zinkenenden der beiden Kammstrukturen 100 und 200 erhöhen die Wellenleiterdämpfung.

Um die Dämpfung möglichst gering zu halten, ist die Breite b der Halbleiterabschnitte 110 und 210 sehr viel kleiner als der Abstand A zwischen den Halbleiterabschnitten gewählt.

Im Übrigen gelten die Erläuterungen im Zusammenhang mit den Figuren 1 und 2 bei dem Ausführungsbeispiel gemäß Figur 3 entsprechend.

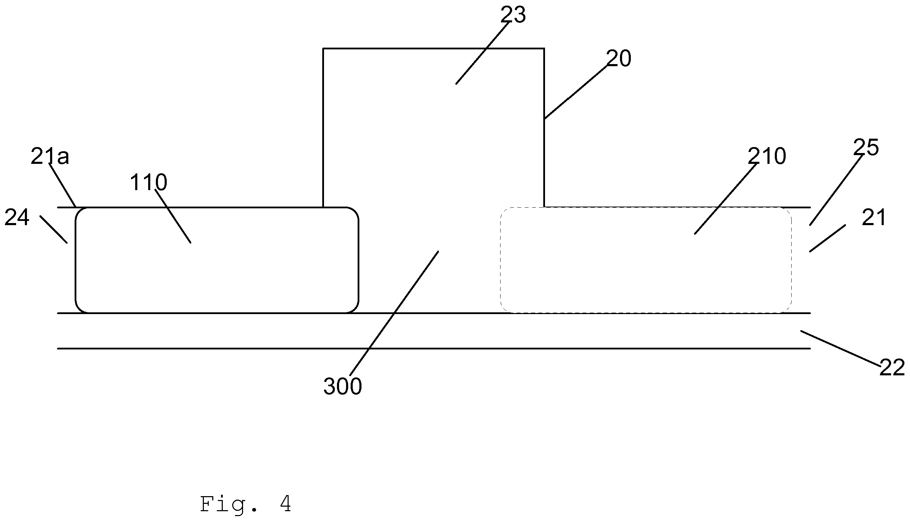

Die Figur 4 zeigt den Injektionsmodulator 10 gemäß Figur 3 entlang der Schnittlinie IV-IV im Querschnitt. Es lässt sich erkennen, dass die p-dotierten Halbleiterabschnitte 110 und die n-dotierten Halbleiterabschnitte 210 sich ausgehend von den Stegabschnitten 24 bzw. 25 bis in den Rippenabschnitt 23 des Wellenleiters 20 hinein erstrecken. Dennoch verbleibt zwischen den Halbleiterabschnitten 110 und 210 ein schwacher oder undotierter Zwischenabschnitt 300, der die Halbleiterabschnitte voneinander trennt und in dem die optische Strahlung - zumindest der Hauptteil der optischen Strahlung - geführt wird.

In der Figur 4 lässt sich ebenfalls erkennen, dass die n-dotierten Halbleiterabschnitte 210 gegenüber den p-dotierten Halbleiterabschnitten 110 entlang der Wellenleiterlängsrichtung versetzt sind. Dies ist in der Figur 4 durch eine gestrichelte Linie bei dem n-dotierten Halbleiterabschnitt 210 visualisiert.

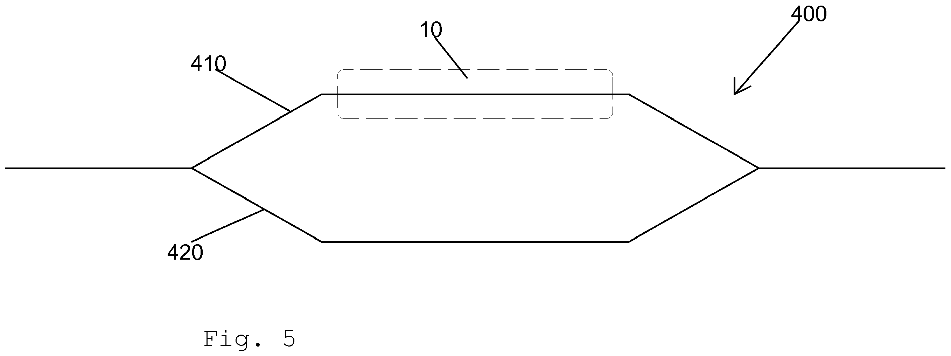

Die Figur 5 zeigt ein Ausführungsbeispiel für einen MZI-Modulator 400, der zwei Interferometerarme 410 und 420 aufweist. Einer der Interferometerarme, beispielsweise der Interferometerarm 410, ist mit einem Injektionsmodulator 10 ausgestattet, wie er beispielhaft in Figuren 1 bis 4 oben erläutert worden ist.

Wird der Injektionsmodulator 10 in Betrieb genommen, so lässt sich die Phase der in dem Interferometerarm 410 geführten Strahlung gegenüber der Phase der in dem Interferometerarm 420 geführten Strahlung verändern, so dass es zu einer Amplitudenmodulation am Ausgang des MZI-Modulators 400 kommt.

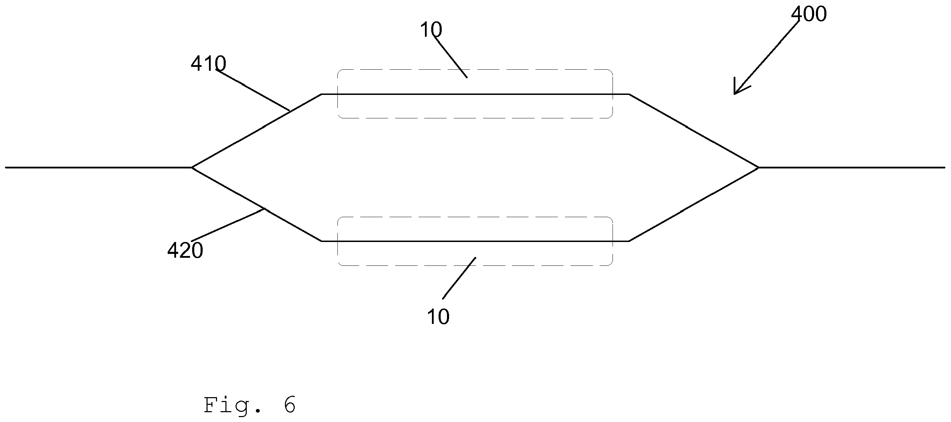

Die Figur 6 zeigt ein Ausführungsbeispiel für einen MZI-Modulator 400, bei dem beide Interferometerarme 410 und 420 jeweils mit einem Injektionsmodulator 10 ausgestattet sind, wie er oben im Zusammenhang mit den Figuren 1 bis 4 erläutert worden ist.

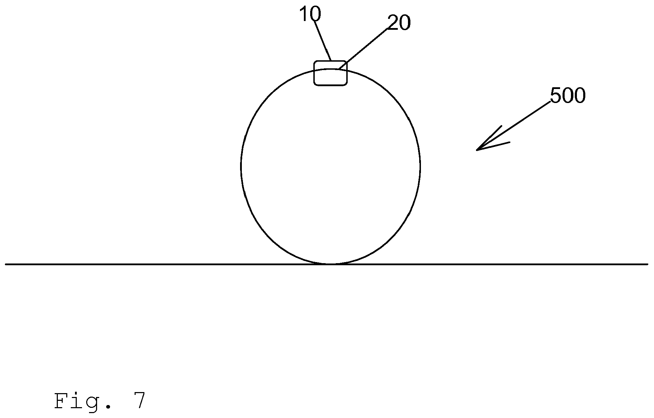

Die Figur 7 zeigt ein Ausführungsbeispiel für einen Ringmodulator 500, bei dem ein Wellenleiter 20 einen Ringresonator bildet. In einem resonatorfreien Abschnitt des Wellenleiters 20 ist ein Injektionsmodulator 10 vorgesehen, wie er im Zusammenhang mit den Figuren 1 bis 4 erläutert worden ist. Die obigen Erläuterungen gelten also für den Modulator 10 gemäß Figur 7 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Injektionsmodulator
- 20: Wellenleiter
- 21: Schicht
- 21a: Oberfläche
- 22: Mantelschicht
- 23: Rippenabschnitt
- 24: Stegabschnitt
- 25: Stegabschnitt
- 30: Diodenstruktur
- 100: obere Kammstruktur
- 110: p-dotierte Halbleiterabschnitte
- 111: Spitzen
- 120: Kammrücken
- 200: untere Kammstruktur
- 210: n-dotierte Halbleiterabschnitte
- 211: Spitzen
- 220: Kammrücken
- 300: Zwischenabschnitt
- 400: MZI-Modulator
- 410: Interferometerarm
- 420: Interferometerarm
- 500: Ringmodulator

- A: Abstand
- b: Breite
- L: Längsrichtung
- P: optische Strahlung
- U: Spannungs-/Stromquelle

## Patentansprüche

1. Injektionsmodulator (10) zur Modulation optischer Strahlung (P) mit
- einem optischen Wellenleiter (20) und
- einer Diodenstruktur (30), die zumindest zwei p-dotierte Halbleiterabschnitte (110), zumindest zwei n-dotierte Halbleiterabschnitte (210) und mindestens einen schwach oder undotierten Zwischenabschnitt (300) zwischen den p-dotierten und n-dotierten Halbleiterabschnitten (110, 210) aufweist, wobei
- die p-dotierten Halbleiterabschnitte (110) - in Längsrichtung (L) des Wellenleiters (20) gesehen - gegenüber den n-dotierten Halbleiterabschnitten (210) versetzt angeordnet sind und
- die Diodenstruktur (30) in einem resonanzfreien Abschnitt des Wellenleiters (20) angeordnet ist, in dem - von Wellenleiterdämpfung abgesehen - die Strahlungsintensität der im Wellenleiter (20) geführten Strahlung (P) konstant ist, **dadurch gekennzeichnet, dass**
- die p-dotierten Halbleiterabschnitte (110) auf einer Seite des Wellenleiters (20) - in Längsrichtung (L) des Wellenleiters (20) gesehen und bezogen auf die Wellenleitermitte - liegen, die n-dotierten Halbleiterabschnitte (210) auf der anderen Seite des Wellenleiters (20) liegen und der Zwischenabschnitt (300) im Bereich der Wellenleitermitte liegt,
- sich die Halbleiterabschnitte (110, 210) jeweils quer zur Wellenleiterlängsrichtung (L) in Richtung der Wellenleitermitte des Wellenleiters (20) erstrecken und
- die p-dotierten Halbleiterabschnitte (110) - in Längsrichtung (L) des Wellenleiters (20) betrachtet - jeweils mit den n-dotierten Halbleiterabschnitten (210) überlappungsfrei sind.

2. Injektionsmodulator (10) nach Anspruch 1,
**dadurch gekennzeichnet, dass**
- der Wellenleiter (20) ein Rippenwellenleiter ist, der einen wellenführenden erhabenen Rippenabschnitt (23) und zwei benachbarte in Rippenlängsrichtung gesehen parallel zum Rippenabschnitt (23) verlaufende Stegabschnitte (24, 25) aufweist,
- sich die p-dotierten Halbleiterabschnitte (110) in einem der beiden Stegabschnitte (24, 25) befinden,
- sich die n-dotierten Halbleiterabschnitte (210) in dem anderen der beiden Stegabschnitte (24, 25) befinden und
- zumindest die Mitte des Rippenabschnitts frei von den p- und n-dotierten Halbleiterabschnitten (110, 210) ist.

3. Injektionsmodulator (10) nach Anspruch 2,
**dadurch gekennzeichnet, dass**
der gesamte Rippenabschnitt (23) frei von den p- und n-dotierten Halbleiterabschnitten (110, 210) ist.

4. Injektionsmodulator (10) nach einem der voranstehenden Ansprüche,
**dadurch gekennzeichnet, dass**
- die p-dotierten Halbleiterabschnitte (110) Zinkenabschnitte einer p-dotierten Kammstruktur (100) bilden, deren Zinken in Wellenleiterlängsrichtung (L) beabstandet zueinander angeordnet sind und sich jeweils ausgehend von einem außerhalb des Wellenleiters (20) befindlichen gemeinsamen Kontaktanschluss von außen quer zur Wellenleiterlängsrichtung (L) in Richtung der Wellenleitermitte des Wellenleiters (20) erstrecken, und
- die n-dotierten Halbleiterabschnitte (210) Zinkenabschnitte einer n-dotierten Kammstruktur (200) bilden, deren Zinken in Wellenleiterlängsrichtung (L) beabstandet zueinander angeordnet sind und sich ausgehend von einem außerhalb des Wellenleiters (20) befindlichen gemeinsamen Kontaktanschluss jeweils von außen quer zur Wellenleiterlängsrichtung (L) in Richtung der Wellenleitermitte des Wellenleiters (20) erstrecken.

5. Injektionsmodulator (10) nach einem der voranstehenden Ansprüche,
**dadurch gekennzeichnet, dass**
- der Rippenwellenleiter eine wellenführende Schicht (21) und eine darunter liegende untere Mantelschicht (22) aufweist und
- sich die Dotierung der n-dotierten Halbleiterabschnitte (210) und die der p-dotierten Halbleiterabschnitte (110) jeweils von der Oberfläche (21a) der wellenführenden Schicht (21) des Rippenwellenleiters bis zu der unteren Mantelschicht (22) erstreckt.

6. Injektionsmodulator (10) nach einem der voranstehenden Ansprüche,
**dadurch gekennzeichnet, dass**
- die Breite (b) der p-dotierten Halbleiterabschnitte (110) jeweils kleiner als der Abstand (A) zwischen benachbarten p-dotierten Halbleiterabschnitten (110) ist und
- die Breite (b) der n-dotierten Halbleiterabschnitte (210) jeweils kleiner als der Abstand (A) zwischen benachbarten n-dotierten Halbleiterabschnitten (210) ist.

7. Injektionsmodulator (10) nach einem der voranstehenden Ansprüche 2 bis 6,
**dadurch gekennzeichnet, dass**
- die p-dotierten Halbleiterabschnitte (110) Bestandteile einer ersten Kammstruktur (100) bilden,
- die n-dotierten Halbleiterabschnitte (210) Bestandteile einer zweiten Kammstruktur (200) bilden und
- die Kammrücken (120, 220) der beiden Kammstrukturen (100, 200) jeweils parallel zum Wellenleiter (20) ausgerichtet sowie jeweils einen Abstand von dem erhabenen Rippenabschnitt (23) des Rippenwellenleiters aufweisen.

8. Injektionsmodulator (10) nach Anspruch 7,
**dadurch gekennzeichnet, dass**
die Kammrücken (120, 220) jeweils durch einen metallischen Kontaktanschluss gebildet sind oder einen solchen aufweisen.

9. Injektionsmodulator (10) nach einem der voranstehenden Ansprüche,
**dadurch gekennzeichnet, dass**
die Dotierung im schwach oder undotierten Zwischenabschnitt (300) kleiner als die intrinsische Ladungsträgerdichte im Zwischenabschnitt (300) ist.

10. Injektionsmodulator (10) nach einem der voranstehenden Ansprüche,
**dadurch gekennzeichnet, dass**
der Injektionsmodulator (10) resonatorfrei ist und der Wellenleiter (20) insgesamt resonanzfrei ist.

11. Injektionsmodulator (10) nach einem der voranstehenden Ansprüche,
**dadurch gekennzeichnet, dass**
- zumindest einer der p-dotierten Halbleiterabschnitte (110) - in Längsrichtung (L) des Wellenleiters (20) gesehen - mittig zwischen zwei schräg gegenüber liegenden n-dotierten Halbleiterabschnitten (210) angeordnet ist und
- zumindest einer der n-dotierten Halbleiterabschnitte (210) - in Längsrichtung (L) des Wellenleiters (20) gesehen - mittig zwischen zwei schräg gegenüber liegenden p-dotierten Halbleiterabschnitten (110) angeordnet ist.

12. Injektionsmodulator (10) nach einem der voranstehenden Ansprüche,
**dadurch gekennzeichnet, dass**
- die p-dotierten Halbleiterabschnitte (110) eine p-dotierte Kammstruktur (100) oder Bestandteile einer solchen und die n-dotierten Halbleiterabschnitte (210) eine n-dotierte Kammstruktur (200) oder Bestandteile einer solchen bilden,
- die p-dotierte Kammstruktur (100) auf einer Seite des Wellenleiters (20) und die n-dotierte Kammstruktur (200) auf der anderen Seite des Wellenleiters (20) angeordnet ist und
- die Zinken der beiden Kammstrukturen jeweils in Richtung der Wellenleitermitte des Wellenleiters (20) ausgerichtet sind.

13. Injektionsmodulator (10) nach einem der voranstehenden Ansprüche,
**dadurch gekennzeichnet, dass**
- der Wellenleiter (20) einen MZI-Modulator (400) bildet und
- zumindest einer der Arme des MZI-Modulators mit einer Diodenstruktur (30) zur Injektion von Ladungsträgern ausgestattet ist.

14. Anordnung mit einem Injektionsmodulator (10) nach einem der voranstehenden Ansprüche und einer Strahlungsquelle,
**dadurch gekennzeichnet, dass**
dass der Abstand der p-dotierten Halbleiterabschnitte (110) untereinander und der Abstand der n-dotierten Halbleiterabschnitte (210) untereinander jeweils größer oder kleiner als die Hälfte der Wellenlänge der Strahlung (P) der Strahlungsquelle ist oder größer oder kleiner als ein ganzzahliges Vielfachen dieser Hälfte ist.

15. Verfahren zur Modulation optischer Strahlung (P), bei dem mit einer Injektionsdiodenstruktur Ladungsträger in einen resonanzfreien Abschnitt eines Wellenleiters (20), in dem - von Wellenleiterdämpfung abgesehen - die Strahlungsintensität der im Wellenleiter (20) geführten Strahlung (P) konstant ist, injiziert werden oder zuvor injizierte aus diesem extrahiert werden,
**dadurch gekennzeichnet, dass**
- die Injektion oder Extraktion von Löchern von einer Seite des Wellenleiters (20) aus und die Injektion oder Extraktion von Elektronen von der anderen Seite des Wellenleiters (20) mittels einer Diodenstruktur (30) erfolgt, die zumindest zwei p-dotierte Halbleiterabschnitte (110), zumindest zwei n-dotierte Halbleiterabschnitte (210) und mindestens einen schwach oder undotierten Zwischenabschnitt (300) zwischen den p-dotierten und n-dotierten Halbleiterabschnitten (110, 210) aufweist,
- wobei die p-dotierten Halbleiterabschnitte (110) auf einer Seite des Wellenleiters (20) - in Wellenleiterlängsrichtung (L) gesehen und bezogen auf die Wellenleitermitte -, die n-dotierten Halbleiterabschnitte (210) auf der anderen Seite des Wellenleiters (20) liegen und der Zwischenabschnitt (300) im Bereich der Wellenleitermitte liegt,
- wobei sich die Halbleiterabschnitte (110, 210) jeweils quer zur Wellenleiterlängsrichtung (L) in Richtung der Wellenleitermitte des Wellenleiters (20) erstrecken und
- wobei die p-dotierten Halbleiterabschnitte (110) - in Längsrichtung (L) des Wellenleiters (20) betrachtet - jeweils gegenüber den n-dotierten Halbleiterabschnitten (210) sowohl versetzt als auch überlappungsfrei sind.

## Claims

1. Injection modulator (10) for modulating optical radiation (P) comprising
- an optical waveguide (20) and
- a diode structure (30) comprising at least two p-doped semiconductor portions (110), at least two n-doped semiconductor portions (210) and at least one weakly doped or undoped intermediate portion (300) between the p-doped and n-doped semiconductor portions (110, 210), wherein
- the p-doped semiconductor portions (110) - as viewed in the longitudinal direction (L) of the waveguide (20) - are arranged offset relative to the n-doped semiconductor portions (210), and
- the diode structure (30) is arranged in a resonance-free portion of the waveguide (20), in which - apart from waveguide damping - the radiation intensity of the radiation (P) guided in the waveguide (20) is constant,
**characterized in that**
- the p-doped semiconductor portions (110) lie on one side of the waveguide (20) - as viewed in the longitudinal direction (L) of the waveguide (20) and relative to the waveguide center -, the n-doped semiconductor portions (210) lie on the other side of the waveguide (20) and the intermediate portion (300) lies in the region of the waveguide center,
- the semiconductor portions (110, 210) extend in each case transversely with respect to the waveguide longitudinal direction (L) in the direction of the waveguide center of the waveguide (20), and
- the p-doped semiconductor portions (110) - as viewed in the longitudinal direction (L) of the waveguide (20) - are in each case free of overlap with the n-doped semiconductor portions (210).

2. Injection modulator (10) according to Claim 1,
**characterized in that**
- the waveguide (20) is a ridge waveguide comprising a waveguiding elevated ridge portion (23) and two adjacent web portions (24, 25) running parallel to the ridge portion (23) as viewed in the ridge longitudinal direction,
- the p-doped semiconductor portions (110) are located in one of the two web portions (24, 25),
- the n-doped semiconductor portions (210) are located in the other of the two web portions (24, 25), and
- at least the center of the ridge portion is free of the p- and n-doped semiconductor portions (110, 210).

3. Injection modulator (10) according to Claim 2,
**characterized in that**
the entire ridge portion (23) is free of the p- and n-doped semiconductor portions (110, 210).

4. Injection modulator (10) according to any of the preceding claims,
**characterized in that**
- the p-doped semiconductor portions (110) form tine portions of a p-doped comb structure (100), the tines of which are arranged at a distance from one another in the waveguide longitudinal direction (L) and extend in each case proceeding from a common contact connection, located outside the waveguide (20), from the outside transversely with respect to the waveguide longitudinal direction (L) in the direction of the waveguide center of the waveguide (20), and
- the n-doped semiconductor portions (210) form tine portions of an n-doped comb structure (200), the tines of which are arranged at a distance from one another in the waveguide longitudinal direction (L) and extend proceeding from a common contact connection, located outside the waveguide (20), in each case from the outside transversely with respect to the waveguide longitudinal direction (L) in the direction of the waveguide center of the waveguide (20) .

5. Injection modulator (10) according to any of the preceding claims,
**characterized in that**
- the ridge waveguide comprises a waveguiding layer (21) and an underlying lower cladding layer (22), and
- the doping of the n-doped semiconductor portions (210) and that of the p-doped semiconductor portions (110) extend in each case from the surface (21a) of the waveguiding layer (21) of the ridge waveguide as far as the lower cladding layer (22).

6. Injection modulator (10) according to any of the preceding claims,
**characterized in that**
- the width (b) of the p-doped semiconductor portions (110) is in each case smaller than the distance (A) between adjacent p-doped semiconductor portions (110), and
- the width (b) of the n-doped semiconductor portions (210) is in each case smaller than the distance (A) between adjacent n-doped semiconductor portions (210).

7. Injection modulator (10) according to any of the preceding Claims 2 to 6,
**characterized in that**
- the p-doped semiconductor portions (110) form constituents of a first comb structure (100),
- the n-doped semiconductor portions (210) form constituents of a second comb structure (200), and
- the comb spines (120, 220) of the two comb structures (100, 200) are aligned in each case parallel to the waveguide (20) and are in each case at a distance from the elevated ridge portion (23) of the ridge waveguide.

8. Injection modulator (10) according to Claim 7,
**characterized in that**
the comb spines (120, 220) in each case are formed by or comprise a metallic contact connection.

9. Injection modulator (10) according to any of the preceding claims,
**characterized in that**
the doping in the weakly doped or undoped intermediate portion (300) is less than the intrinsic charge carrier density in the intermediate portion (300).

10. Injection modulator (10) according to any of the preceding claims,
**characterized in that**
the injection modulator (10) is resonator-free and the waveguide (20) overall is resonance-free.

11. Injection modulator (10) according to any of the preceding claims,
**characterized in that**
- at least one of the p-doped semiconductor portions (110) - as viewed in the longitudinal direction (L) of the waveguide (20) - is arranged centrally between two n-doped semiconductor portions (210) lying obliquely opposite, and
- at least one of the n-doped semiconductor portions (210) - as viewed in the longitudinal direction (L) of the waveguide (20) - is arranged centrally between two p-doped semiconductor portions (110) lying obliquely opposite.

12. Injection modulator (10) according to any of the preceding claims,
**characterized in that**
- the p-doped semiconductor portions (110) form a p-doped comb structure (100) or constituents thereof and the n-doped semiconductor portions (210) form an n-doped comb structure (200) or constituents thereof,
- the p-doped comb structure (100) is arranged on one side of the waveguide (20) and the n-doped comb structure (200) is arranged on the other side of the waveguide (20), and
- the tines of the two comb structures are aligned in each case in the direction of the waveguide center of the waveguide (20).

13. Injection modulator (10) according to any of the preceding claims,
**characterized in that**
- the waveguide (20) forms an MZI modulator (400), and
- at least one of the arms of the MZI modulator is equipped with a diode structure (30) for injecting charge carriers.

14. Arrangement comprising an injection modulator (10) according to any of the preceding claims, and a radiation source,
**characterized in that**
the distance between the p-doped semiconductor portions (110) among one another and the distance between the n-doped semiconductor portions (210) among one another are in each case greater or less than half of the wavelength of the radiation (P) of the radiation source or are greater or less than an integer multiple of said half.

15. Method for modulating optical radiation (P), wherein, with an injection diode structure, charge carriers are injected into a resonance-free portion of a waveguide (20), in which - apart from waveguide damping - the radiation intensity of the radiation (P) guided in the waveguide (20) is constant, or previously injected charge carriers are extracted therefrom, **characterized in that**
- the injection or extraction of holes is performed from one side of the waveguide (20) and the injection or extraction of electrons is performed from the other side of the waveguide (20) by means of a diode structure (30) comprising at least two p-doped semiconductor portions (110), at least two n-doped semiconductor portions (210) and at least one weakly doped or undoped intermediate portion (300) between the p-doped and n-doped semiconductor portions (110, 210),
- wherein the p-doped semiconductor portions (110) lie on one side of the waveguide (20) - as viewed in the waveguide longitudinal direction (L) and relative to the waveguide center -, the n-doped semiconductor portions (210) lie on the other side of the waveguide (20) and the intermediate portion (300) lies in the region of the waveguide center,
- wherein the semiconductor portions (110, 210) extend in each case transversely with respect to the waveguide longitudinal direction (L) in the direction of the waveguide center of the waveguide (20), and
- wherein the p-doped semiconductor portions (110) - as viewed in the longitudinal direction (L) of the waveguide (20) - are both offset and free of overlap in each case relative to the n-doped semiconductor portions (210).

## Revendications

1. Modulateur d'injection (10), destiné à moduler un rayonnement optique (P), comprenant
- un guide d'ondes optique (20) et
- une structure de diodes (30), qui comporte au moins deux segments de semi-conducteur (110) dopés p, au moins deux segments de semi-conducteur (210) dopés n et au moins un segment intermédiaire (300) faiblement dopé ou non dopé entre les segments de semi-conducteur (110, 210) dopés p et dopés n,
- les segments de semi-conducteur (110) dopés p (vus dans la direction longitudinale (L) du guide d'onde (20) étant placés en étant décalés par rapport aux segments de semi-conducteur (210) dopés n et
- la structure de diodes (30) étant placée dans un segment sans résonance du guide d'ondes (20) dans lequel (à l'exception de l'atténuation dans le guide d'ondes), l'intensité du rayonnement (P) guidé dans le guide d'ondes (20) est constante,
**caractérisé en ce que**
- les segments de semi-conducteur (110) dopés p se situent sur un côté du guide d'ondes (20) (vu dans la direction longitudinale (L) du guide d'onde (20) et en rapport au centre du guide d'ondes), les segments de semi-conducteur (210) dopés n se situent de l'autre côté du guide d'ondes (20) et le segment intermédiaire (300) se situe dans la région du centre du guide d'ondes,
- les segments de semi-conducteur (110, 210) s'étendent chacun à la transversale de la direction longitudinale (L) du guide d'ondes, dans la direction du centre du guide d'ondes (20) et
- les segments de semi-conducteur (110) dopés p - considérés dans la direction longitudinale (L) du guide d'ondes (20) - sont chacun exempt de chevauchement avec les segments de semi-conducteur dopés n (210).

2. Modulateur d'injection (10) selon la revendication 1,
**caractérisé en ce que**
- le guide d'ondes (20) est un guide d'ondes nervuré, qui comporte un segment nervuré (23) en relief guidant les ondes et deux segments d'âme (24, 25) voisins, vus dans la direction longitudinale des nervures, s'écoulant à la parallèle du segment nervuré (23),
- les segments de semi-conducteur (110) dopés p se trouvent dans l'un des deux segments d'âme (24, 25),
- les segment de semi-conducteur (210) dopés n se trouvent dans l'autre des deux segments d'âme (24, 25) et
- au moins le centre du segment nervuré est exempt de segments de semi-conducteur (110, 210) dopés p et dopés n.

3. Modulateur d'injection (10) selon la revendication 2,
**caractérisé en ce que**
l'ensemble du segment nervuré (23) est exempt des segments de semi-conducteur (110, 210) dopés p et dopés n.

4. Modulateur d'injection (10) selon l'une quelconque des revendications précédentes,
**caractérisé en ce que**
- les segments de semi-conducteur (110) dopés p forment des segments dentés d'une structure en peigne (100) dotée p, dont les dents sont placées avec un écart mutuel, dans la direction longitudinale (L) du guide d'ondes et s'étendent en partant chacune d'une borne de contact commune située à l'extérieur du guide d'ondes (20), de l'extérieur à la transversale de la direction longitudinale (L) du guide d'ondes dans la direction du centre du guide d'ondes (20) et
- les segments de semi-conducteur (210) dopés n forment des segments dentés d'une structure en peigne (200) dotée n, dont les dents sont placées avec un écart mutuel, dans la direction longitudinale (L) du guide d'ondes et s'étendent en partant chacune d'une borne de contact commune située à l'extérieur du guide d'ondes (20), de l'extérieur à la transversale de la direction longitudinale (L) du guide d'ondes dans la direction du centre du guide d'ondes (20).

5. Modulateur d'injection (10) selon l'une quelconque des revendications précédentes,
**caractérisé en ce que**
- le guide d'ondes nervuré comporte une couche (21) guidant les ondes et une couche d'enveloppe (22) inférieure sous-jacente et
- le dopage des segments de semi-conducteur (210) dopés n et celui des segments de semi-conducteur (110) dopés p s'étend chaque fois de la surface (21a) de la couche (21) guidant les ondes du guide d'ondes nervuré jusqu'à une couche d'enveloppe (22) inférieure.

6. Modulateur d'injection (10) selon l'une quelconque des revendications précédentes,
**caractérisé en ce que**
- la largeur (b) des segments de semi-conducteur (110) dopés p est respectivement inférieure à l'écart (A) entre des segments de semi-conducteur (110) dopés p voisins et
- la largeur (b) des segments de semi-conducteur (210) dopés n est respectivement inférieure à l'écart (A) entre des segments de semi-conducteur (210) dopés n voisins.

7. Modulateur d'injection (10) selon l'une quelconque des revendications 2 à 6 précédentes,
**caractérisé en ce que**
- les segments de semi-conducteur (110) dopés p forment des composants d'une première structure en peigne (100),
- les segments de semi-conducteur (210) dopés n forment des composants d'une deuxième structure en peigne (200) et
- les dos de peigne (120, 220) des deux structures en peignes (100, 200) sont orientés chacun à la parallèle du guide d'ondes (20) et présentent chacun un écart par rapport au segment nervuré (23) en relief du guide d'ondes nervuré.

8. Modulateur d'injection (10) selon la revendication 7,
**caractérisé en ce que**
les dos de peigne (120, 220) sont formés chacun par une borne de contact métallique ou en comportent une telle.

9. Modulateur d'injection (10) selon l'une quelconque des revendications précédentes,
**caractérisé en ce que**
le dopage dans le segment intermédiaire (300) faiblement dopé ou non dopé est inférieur à la densité intrinsèque des porteurs de charge dans le segment intermédiaire (300).

10. Modulateur d'injection (10) selon l'une quelconque des revendications précédentes,
**caractérisé en ce que**
le modulateur d'injection (10) est sans résonateur et le guide d'ondes (20) est globalement sans résonance.

11. Modulateur d'injection (10) selon l'une quelconque des revendications précédentes,
**caractérisé en ce que**
- vu dans la direction longitudinale (L) du guide d'ondes (20), au moins l'un des segments de semi-conducteur (110) dopés p est placé au centre entre deux segments de semi-conducteur (210) dopés n opposés en diagonale et
- vu dans la direction longitudinale (L) du guide d'ondes (20), au moins l'un des segments de semi-conducteur (210) dopés n est placé au centre entre deux segments de semi-conducteur (110) dopés p opposés en diagonale.

12. Modulateur d'injection (10) selon l'une quelconque des revendications précédentes,
**caractérisé en ce que**
- les segments de semi-conducteur (110) dopés p forment une structure en peigne (100) dopée p ou des composants d'une telle structure et les segments de semi-conducteur (210) dopés n forment une structure en peigne (200) dopée n ou des composants d'une telle structure,
- la structure en peigne (100) dopée p est placée sur un côté du guide d'ondes (20) et la structure en peigne (200) dotée n est placée sur l'autre côté du guide d'ondes (20) et
- les dents des deux structures en peigne sont orientées chacune dans la direction du centre du guide d'ondes (20).

13. Modulateur d'injection (10) selon l'une quelconque des revendications précédentes,
**caractérisé en ce que**
- le guide d'ondes (20) forme un modulateur MZI (400) et
- au moins l'un des bras du modulateur MZI est équipé d'une structure de diodes (30) pour l'injection de porteurs de charges.

14. Agencement, pourvu d'un modulateur d'injection (10) selon l'une quelconque des revendications précédentes et d'une source de rayonnement,
**caractérisé en ce que**
l'écart mutuel entre les segments de semi-conducteur (110) dopés p et l'écart mutuel entre les segments de semi-conducteur (210) dopés n est respectivement supérieur ou inférieur à la moitié de la longueur d'ondes du rayonnement (P) de la source de rayonnement ou est supérieur ou inférieur à un multiple entier de ladite moitié.

15. Procédé, destiné à moduler un rayonnement optique (P), lors duquel, à l'aide d'une structure de diodes d'injection, des porteurs de charge sont injectés dans un segment sans résonance d'un guide d'ondes (20), dans lequel (à l'exception de l'atténuation dans le guide d'ondes), l'intensité du rayonnement (P) guidé dans le guide d'ondes (20) est constante, ou des porteurs de charge qui y ont été précédemment injectés sont extraits de celui-ci,
**caractérisé en ce que**
- l'injection ou l'extraction s'effectue à partir de trous, d'un côté du guide d'ondes (20) et l'injection ou l'extraction d'électrons s'effectue à partir de l'autre côté du guide d'ondes (20), à l'aide d'une structure de diodes (30) qui comporte au moins deux segments de semi-conducteur (110) dopés p, au moins deux segments de semi-conducteur (210) dopés n et au moins un segment intermédiaire (300) faiblement dopé ou non dopé entre les segments de semi-conducteur (110, 210) dopés p et dopés n,
- les segments de semi-conducteur (110) dopés p se trouvant sur un côté du guide d'ondes (20) (vu dans la direction longitudinale (L) du guide d'ondes et en rapport au centre du guide d'ondes), les segments de semi-conducteur (210) dopés n se situant sur l'autre côté du guide d'ondes (20) et le segment intermédiaire (300) se situant dans la région du centre du guide d'ondes,
- les segments de semi-conducteur (110, 210) s'étendant chacun à la transversale de la direction longitudinale (L) du guide d'ondes, dans la direction du centre du guide d'ondes (20) et
- les segments de semi-conducteur (110) dopés p - considérés dans la direction longitudinale (L) du guide d'ondes (20) - étant chacun aussi bien décalés qu'également exempts de chevauchement par rapport aux segments de semi-conducteur (210) dopés n.
